# EUROPÄISCHE PATENTSCHRIFT

(11) **EP 2 338 091 B1**
(45) Veröffentlichungstag und Bekanntmachung des Hinweises auf die Patenterteilung: **15.08.2012**
(21) Anmeldenummer: 09783896.5
(22) Anmeldetag: 09.10.2009
(51) Int. Cl.: G05B 19/042

(54) **VERFAHREN ZUR DYNAMISCHEN ANPASSUNG EINES DIAGNOSESYSTEMS**
METHOD FOR DYNAMICALLY ADAPTING A DIAGNOSTIC SYSTEM
PROCÉDÉ POUR L'ADAPTATION DYNAMIQUE D'UN SYSTÈME DE DIAGNOSTIC

(30) Priorität: 22.10.2008 DE 102008043094
(43) Veröffentlichungstag der Anmeldung: 29.06.2011
(73) Patentinhaber: Endress + Hauser Process Solutions AG, 4153 Reinach (CH)
(72) Erfinder: HÄHNICHE, Jörg, 79183 Bad Krozingen (DE); KÖLBLIN, Robert, 79539 Lörrach (DE); MANEVAL, Michael, 79650 Schopfheim (DE); SCHIAVI, Emilio, CH-4104 Oberwil (CH)
(74) Vertreter: Andres, Angelika Maria
(86) Internationale Anmeldenummer: PCT/EP2009/063179
(87) Internationale Veröffentlichungsnummer: WO 2010/046248

(56) Entgegenhaltungen:
- WO-A-2007/147375
- US-A- 5 768 119

## Beschreibung

Die vorliegende Erfindung betrifft ein Verfahren zur dynamischen Anpassung eines Diagnosesystems.

In der Prozessautomatisierungstechnik werden vielfach Feldgeräte eingesetzt, die zur Erfassung und/oder Beeinflussung von Eigenschaften eines Prozesses dienen. Zur Erfassung dienen Sensoren, wie beispielsweise Füllstandsmessgeräte, Durchflussmessgeräte, Druckund Temperaturmessgeräte, pH-Redoxpotentialmessgeräte, Leitfähigkeitsmessgeräte, etc., welche einen Füllstand, einen Durchfluss, einen Druck, eine Temperatur, einen pH-Wert bzw. eine Leitfähigkeit erfassen. Zur Beeinflussung eines Prozesses dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über Feldbus-Systeme (z.B. Profibus®, Foundation® Fieldbus, HART®, etc.) (Ebene 1) mit einem oder mehreren Controllern, wie beispielsweise einer SPS (Speicherprogrammierbare Steuerung), einem PLC (Programmable Logic Controller), einem Linking Device oder einem Gateway, verbunden. Der Controller kann dabei in Bezug auf die angeschlossenen Feldgeräte eine Steuerungsapplikation ausführen. Hierzu werden beispielsweise Messwerte, die von einzelnen Feldgeräten erfasst werden, über das Feldbus-System der Ebene 1 an den Controller übermittelt und der Controller gibt in Abhängigkeit von diesen Messwerten Steuerungsbefehle an Feldgeräte aus. Ferner sind in modernen Industrieanlagen häufig eine oder mehrere übergeordnete Einheiten, insbesondere OPC-Client(s) (OPC: OLE for Process Control), die als Visualisierungssystem, Überwachungssystem, Archivierungssystem, etc., dienen, über ein übergeordnetes Netzwerksystem (Ebene 2), wie beispielsweise ein HSE-Netzwerksystem (HSE: High Speed Ethernet), und ein Linking Device oder ein Gateway mit dem Feldbus-System der Ebene 1 verbunden. Solch eine übergeordnete Einheit kann dabei beispielsweise als SCADA-System (SCADA: Supervisory Control and Data Acquisition; deutsch: Überwachung, Steuerung und Datenerfassung) ausgebildet sein. Das Linking Device oder Gateway kann gleichzeitig auch Steuerungsapplikationen in Bezug auf Feldgeräte des Feldbus-Systems der Ebene 1 ausführen.

In modernen Feldgeräten werden in der Regel verschiedene Eigenschaften des Feldgerätes selbst, Eigenschaften eines Prozesses, in dem das Feldgerät eingesetzt wird, und/oder Eigenschaften einer Kommunikationsverbindung des Feldgerätes überwacht. Entsprechende Parameter, durch die Informationen über diese Eigenschaften gegeben werden, sind in den Feldgeräten vorgesehen. Insbesondere in einem Feldgerät, das gemäß dem Foundation@ Fieldbus Bussystem ausgebildet ist, sind solche Parameter vorgesehen. Diese Parameter können prinzipiell für eine Diagnose des Feldgerätes und dessen Umgebung genutzt werden. Im Folgenden werden diese Parameter, die in einem Feldgerät vorgesehen sind, durch die Informationen über eine oder mehrere der oberhalb angegebenen Eigenschaften gegeben werden, und die dementsprechend für Diagnosezwecke nutzbar sind, als Diagnoseparameter bezeichnet. Eine Gruppe solcher Diagnoseparameter bilden Diagnoseparameter, die Informationen bezüglich der Kommunikationsverbindung des Feldgerätes liefern. Eine weitere Gruppe von solchen Diagnoseparametern bilden gerätebezogene Diagnoseparameter, die Informationen über Eigenschaften des Feldgerätes selbst und/oder über Eigenschaften eines Prozesses, in dem das Feldgerät eingesetzt wird, liefern.

Bisher bestehen nur begrenzte Möglichkeiten, diese Diagnoseparameter aus einem Feldgerät auszulesen und effektiv für eine Diagnose zu nutzen. Eine Möglichkeit besteht darin, solche Diagnoseparameter durch ein Bedienwerkzeug aus dem Feldgerät auszulesen. Ein Benutzer, der die jeweiligen Diagnoseparameter über das Bedienwerkzeug ausliest, muss anhand der jeweiligen Werte dieser Diagnoseparameter dann selbst entscheiden, ob ein kritischer Zustand vorliegt und ein Reengineering oder anderweitige Maßnahmen erforderlich sind. Dafür muss der Benutzer jedoch über ein relativ umfangreiches Fachwissen verfügen.

Weiterhin sind teilweise in Stromversorgungseinheiten für ein Feldbus-System Diagnosemodule vorgesehen, durch die das über die jeweiligen Kommunikationsverbindungen übertragene Signal messtechnisch erfasst und analysiert wird. Dadurch werden Informationen über Eigenschaften der Kommunikationsverbindungen der an dem Feldbus-System angeschlossenen Teilnehmer gewonnen. Falls Diagnoseparameter, die Informationen bezüglich der Kommunikationsverbindung eines Feldgerätes liefern, außerhalb eines zulässigen Bereichs sind oder ein anderweitiges Kriterium für eine Alarm- oder Fehlermeldung gegeben ist, wird über das Diagnosemodul eine Alarm- oder Fehlermeldung ausgegeben.

Ferner sind teilweise auch intern in Feldgeräten Grenzwerte für die jeweiligen Diagnoseparameter vorgesehen. Wird solch ein Grenzwert überschritten, so gibt/geben das Feldgerät und/oder ein mit dem Feldgerät in Kommunikationsverbindung stehender Controller eine Alarm- oder Fehlermeldung aus. Je nachdem, um welche Art von Diagnoseparameter, dessen Grenzwert überschritten wird, es sich handelt, wird gegebenenfalls der Status des Messwertes, der von dem betreffenden Feldgerät ausgegeben wird, auf "bad" (deutsch: schlecht) gesetzt. Dies bedeutet, dass der Messwert nicht verwendbar ist. Einem Benutzer wird dann in der Regel über eine an dem Netzwerksystem der Ebene 2 angeschlossene übergeordnete Einheit, wie beispielsweise über ein Visualisierungssystem und/oder ein SCADA-System, eine Alarm- oder Fehlermeldung gegeben.

Teilweise ist in Situationen, in denen eine Alarm- oder Fehlermeldung an den Benutzer gegeben wird (beispielsweise über eine an dem Netzwerksystem der Ebene 2 angeschlossene übergeordnete Einheit und/oder über das oberhalb angegebene Diagnosemodul) ein weiterer Betrieb der Anlage möglich. Insbesondere kann bei bestimmten Diagnoseparametern das Überschreiten eines Grenzwertes für den Betrieb der gesamten Anlage unkritisch sein und/oder das Überschreiten eines Grenzwertes kann durch Alterungserscheinungen des jeweiligen Feldgerätes, Feldgerätebauteils oder der jeweiligen Kommunikationsverbindung bedingt sein, wobei dennoch ein weiterer Betrieb der Anlage möglich ist. In anderen Fällen wiederum ist das Überschreiten eines Grenzwertes eines Diagnoseparameters derart kritisch, dass tatsächlich der Betrieb der Anlage gestoppt werden muss. Ein Operator (eine Bedienperson), der vor Ort eine solche übergeordnete Einheit und/oder ein Diagnosemodul (für die Kommunikationsverbindung) überwacht, verfügt in der Regel nicht über ausreichendes Fachwissen, um die jeweilige Relevanz der auftretenden Alarm- oder Fehlermeldungen korrekt einzuschätzen. Dementsprechend ist ein Operator oftmals bei Auftreten einer Alarmoder Fehlermeldung gezwungen, den Betrieb der Anlage zu stoppen, selbst wenn die angezeigte Alarm- oder Fehlermeldung in der konkreten Situation unkritisch für den Betrieb der Anlage ist. Derartige Stillstandzeiten der Anlage führen zu erhöhten Kosten für den Anlagenbetreiber.

Die Offenlegungsschrift WO 2007147375 beschreibt ein Verfahren zum Betrieb eines Automatisierungsgerätes, wobei bei einem das Automatisierungsgerät betreffend Ereignis eine diesbezügliche Meldung ausgegeben wird und wobei sich ein Inhalt der Meldung anhand von Berichtsdaten ergibt, und wobei die Berichtsdaten veränderlich sind.

Die Patentschrift US 5769119 beschreibt ein Prozesskontrollsystem, das ein Alarm- und ein Ereignis-Überwachungs- und ein Anzeige-System aufweist, bei dem unterschiedliche Nutzer einfach die Alarm- und Ereignis-Informationen die auf der Anzeige angezeigt werden priori*sieren können.*

In der DE 10 2005 063 055 A1 ist ein Verfahren beschrieben, bei dem in einem Feldgerät die zeitliche Entwicklung eines Güteparameters für die Kommunikationsverbindung dieses Feldgerätes, insbesondere eines Stale-Count-Parameters dieses Feldgerätes, erfasst und ausgewertet wird. In Abhängigkeit von dieser Entwicklung wird in dem Feldgerät gegebenenfalls ein Grenzwert für den Güteparameter angepasst. Für die Erfassung und Auswertung der zeitlichen Entwicklung und gegebenenfalls für die Anpassung des Grenzwertes kann ein in dem Feldgerät implementiertes Expertensystem eingesetzt werden. Durch das in der DE 10 2005 063 055 A1 beschriebene Verfahren ist eine umfassende Nutzung der von einem Feldgerät bereitgestellten Diagnoseparameter nicht möglich. Ferner ermöglicht dieses Verfahren nicht, verschiedene Diagnoseparameter des betreffenden Feldgerätes und gegebenenfalls auch verschiedener Feldgeräte zueinander in Beziehung zu setzen und daraus weitere Diagnoseinformationen zu erhalten.

Demgemäß besteht die Aufgabe der vorliegenden Erfindung darin, die in einem Feldgerät vorgesehenen Diagnoseparameter effektiv für eine Diagnose zu nutzen und einem Benutzer derart Diagnoseinformationen bereitzustellen, dass Anlagenstillstände, die nicht zwingend erforderlich sind, vermieden werden.

Die Aufgabe wird durch ein Verfahren zur dynamischen Anpassung eines Diagnosesystems gemäß Anspruch 1 gelöst. Vorteilhafte Weiterbildungen der Erfindung sind in den Unteransprüchen angegeben.

Gemäß der vorliegenden Erfindung wird ein Verfahren zur dynamischen Anpassung eines Diagnosesystems, das zumindest teilweise in einem Controller implementiert (bzw. vorgesehen) ist und das mindestens einen Diagnoseblock aufweist, bereitgestellt. Dabei steht der Controller über einen Feldbus mit mindestens einem Feldgerät in Kommunikationsverbindung, wobei der mindestens eine Diagnoseblock derart ausgebildet ist, dass durch diesen verschiedene Diagnoseparameter des mindestens einen Feldgerätes auslesbar sind. Ferner ist der mindestens eine Diagnoseblock in dem Controller und/oder in dem mindestens einen Feldgerät implementiert (bzw. vorgesehen). Das Verfahren weist nachfolgende Schritte auf:
A) Auslesen mindestens eines Diagnoseparameters des Feldgerätes durch das Diagnosesystem;
B) Überprüfen durch das Diagnosesystem unter Heranziehung des mindestens einen, ausgelesenen Diagnoseparameters, ob ein vorbestimmtes Kriterium für eine Alarmoder Fehlermeldung erfüllt ist;
C) Falls solch ein vorbestimmtes Kriterium erfüllt ist, automatisiertes Überprüfen durch das Diagnosesystem anhand vorbestimmter Regeln, ob eine Anpassung des Kriteriums derart möglich ist, dass das angepasste Kriterium für eine Alarm- oder Fehlermeldung nicht mehr erfüllt ist; und
D) Ausgeben einer Alarm- oder Fehlermeldung nur dann, falls eine derartige Anpassung des Kriteriums nicht möglich ist.

Durch die Bereitstellung eines Diagnoseblocks, durch den verschiedene Diagnoseparameter des mindestens einen Feldgerätes auslesbar sind, wird eine effektive Nutzung der in einem Feldgerät vorgesehenen Diagnoseparameter für eine Diagnose ermöglicht. Der Schritt des Auslesens des mindestens einen Diagnoseparameters des Feldgerätes (Schritt A)) wird dabei durch mindestens einen Diagnoseblock durchgeführt. Das Diagnosesystem kann dadurch auf Diagnoseparameter zugreifen und diese gegebenenfalls zueinander in Beziehung setzen, die bisher lediglich intern in dem Feldgerät bereitgestellt und nicht für eine Diagnose genutzt wurden. Das zumindest teilweise in dem Controller vorgesehene Diagnosesystem hat hierbei die Möglichkeit, nicht nur basierend auf dem Wert eines einzelnen Diagnoseparameters eine Diagnose zu erstellen, sondern bei der Erstellung der Diagnose, insbesondere bei dem Schritt des Überprüfens, ob ein vorbestimmtes Kriterium für eine Alarm- oder Fehlermeldung erfüllt ist (Schritt B)), und bei dem Schritt des Überprüfens, ob eine Anpassung des Kriteriums für eine Alarm- oder Fehlermeldung möglich ist (Schritt C)), mehrere Diagnoseparameter eines oder mehrerer Feldgeräte in Beziehung zueinander zu setzen. Vorzugsweise ist vorgesehen, dass auch die weiteren Schritte (Schritte B) bis D)) jeweils durch einen Diagnoseblock ausgeführt werden.

Ferner sind gemäß der vorliegenden Erfindung vorbestimmte Regeln (bzw. Algorithmen) in dem Diagnosesystem, insbesondere in dem Controller, hinterlegt, die bei einem oder mehreren Kriterien für eine Alarm- oder Fehlermeldung angeben, ob und gegebenenfalls in welchen Situationen (bzw. unter welchen Bedingungen) eine Anpassung des jeweiligen Kriteriums möglich ist. Durch die Schritte des Überprüfens, ob eine Anpassung des Kriteriums möglich ist (Schritt C)), und des Ausgebens einer Alarm- oder Fehlermeldung nur dann, falls eine derartige Anpassung nicht möglich ist (Schritt D)), wird verhindert, dass in Situationen, in denen zwar grundsätzlich ein Kriterium für eine Alarm- oder Fehlermeldung erfüllt ist, die konkrete Situation aber nicht kritisch für den Betrieb der Anlage ist, eine Alarm- oder Fehlermeldung ausgegeben und/oder der Status eines Wertes, insbesondere eines Messwertes, auf "bad" gesetzt wird. Dadurch wird ein Operator nicht veranlasst, den Betrieb der Anlage in Fällen, in denen dies nicht erforderlich ist, zu stoppen. Insbesondere kann spezifischer und flexibler auf die jeweilige Situation reagiert werden. Beispielsweise kann, wie unterhalb in Bezug auf eine vorteilhafte Weiterbildung noch detaillierter erläutert wird, eine Nachricht ausgegeben werden, die einen Operator darauf hinweist, dass zwar ein Wartungsbedarf besteht oder dass ein Grenzwert überschritten wurde, etc., dass die betreffende Situation aber nicht kritisch für den weiteren Betrieb der Anlage ist. Die jeweilige Wartung kann dadurch beispielsweise erst bei dem nächsten (planmäßigen) Stillstand der Anlage erfolgen.

Bei der Erstellung der vorbestimmten Regeln können unter anderem Eigenschaften der jeweiligen Feldgeräte berücksichtigt werden. Beispielsweise kann vorgesehen sein, dass bei Eintreten einer Überlastsituation an einem Sensor dennoch ein weiterer, gegebenenfalls zeitlich begrenzter Betrieb des jeweiligen Feldgerätes möglich ist. Ferner können prozessspezifische und/oder anlagenspezifische Eigenschaften berücksichtigt werden. Beispielsweise kann dabei berücksichtigt werden, dass eine Fehlfunktion bestimmter Feldgeräte nicht kritisch für den Prozess der Anlage ist und/oder dass an manchen Prozesspunkten auch eine reduzierte Messgenauigkeit ausreichend ist. Die Schritte A) bis D) werden durch das Diagnosesystem automatisiert, d.h. ohne menschliches Eingreifen, ausgeführt. Durch das Diagnosesystem wird dementsprechend effektiv verhindert, dass ein Operator der Anlage mit unnötigen Alarm- oder Fehlermeldungen konfrontiert wird.

Unter einem Diagnoseblock wird in dem vorliegenden Zusammenhang ein Block innerhalb der jeweiligen Gerätesoftware verstanden, der derart programmiert ist, dass er bei Aufruf nach vorbestimmten Regeln abgearbeitet wird. Die vorbestimmten Regeln (bzw. Algorithmen) werden gemäß der vorliegenden Erfindung dabei derart gewählt, dass durch mindestens einen der Diagnoseblöcke (falls mehrere Diagnoseblöcke vorgesehen sind) verschiedene Diagnoseparameter des mindestens einen Feldgerätes auslesbar sind. Daneben kann der jeweilige Diagnoseblock derart programmiert sein, dass er zusätzlich auch eine oder mehrere der weiteren Funktionen, die in Bezug auf das Diagnosesystem angegeben sind, ausführt.

Das Diagnosesystem kann gemäß der vorliegenden Erfindung ausschließlich in dem Controller implementiert sein oder es kann als verteiltes Diagnosesystem ausgebildet sein, das teilweise in dem Controller und teilweise in einem oder mehreren Feldgeräten implementiert ist. Auf diese Varianten wird unterhalb unter Bezugnahme auf Weiterbildungen der Erfindung eingegangen. Unter "Controller" wird in dem vorliegenden Zusammenhang eine Einheit verstanden, die über den Feldbus (Ebene 1) mit dem mindestens einen Feldgerät in Kommunikationsverbindung steht und die gleichzeitig über ein übergeordnetes Netzwerksystem (z.B. Ebene 2 oder allgemein ein Backbone), wie beispielsweise ein HSE-Netzwerksystem (HSE: High Speed Ethernet), mit einer oder mehreren übergeordneten Einheiten (bspw. ein Visualisierungssystem, ein SCADA-System und/oder ein Archivierungssystem, etc.) in Kommunikationsverbindung steht. Ein "Controller" umfasst dabei insbesondere eine SPS (Speicherprogrammierbare Steuerung), einen PLC (Programmable Logic Controller), ein Linking Device und ein Gateway. Unter einem "Feldgerät" werden in dem vorliegenden Zusammenhang neben Sensoren und Aktoren auch weitere Geräte, die an dem Feldbus (der Ebene 1) angeschlossen sind und über den Feldbus mit dem Controller in Kommunikationsverbindung stehen, wie beispielsweise Gateways und/oder Linking Devices zu weiteren Feldbus-Segmenten, verstanden.

Gemäß einer vorteilhaften Weiterbildung wird dann, falls der Schritt des Überprüfens ergibt, dass eine derartige Anpassung des Kriteriums möglich ist, das Kriterium automatisiert entsprechend angepasst. Dadurch wird das Auftreten einer Alarm- oder Fehlermeldung in Situationen, in denen ein sicherer Betrieb der Anlage nicht gefährdet ist, effektiv vermieden. Eine Anpassung des Kriteriums kann beispielsweise durch Erhöhen eines Grenzwertes eines oder mehrerer Diagnoseparameter um einen vorbestimmten Betrag, durch das Abwarten einer vorbestimmten Zeit und das erneute Überprüfen des jeweilige Kriteriums, durch das Zulassen eines weiteren Betriebs für eine vorbestimmte, begrenzte Zeitdauer, bevor dann eine Alarm- oder Fehlermeldung ausgegeben wird, etc., erfolgen.

Gemäß einer vorteilhaften Weiterbildung werden die Schritte des Überprüfens, ob eine Anpassung des Kriteriums möglich ist (Schritt C)), und des Ausgebens einer Alarm- oder Fehlermeldung (Schritt D)) durch den Controller durchgeführt. In einem Controller ist in der Regel ausreichend Prozessorleistung und Speicherplatz für eine schnelle und effektive Durchführung dieser Schritte vorhanden. Ferner wird dadurch auf einfache Weise ermöglicht, dass bei dem Schritt C) mehrere Diagnoseparameter eines oder mehrerer Feldgeräte zueinander in Beziehung gesetzt werden. Vorzugsweise werden die Schritte C) und/oder D) durch einen in dem Controller vorgesehenen Diagnoseblock durchgeführt. Dadurch wird eine gute Interoperabilität gewährleistet, insbesondere werden ein Aufruf und die Ausführung des Diagnoseblocks sowie die Einbindung des Diagnosesystems in eine übergeordnete Steuerung erleichtert.

Gemäß einer vorteilhaften Weiterbildung wird in dem Fall, in dem das Kriterium angepasst wird, von dem Controller eine entsprechende Nachricht ausgegeben. Diese Nachricht kann beispielsweise durch eine Warnmeldung gebildet werden, die einem Operator zwar mitteilt, dass eine Verschlechterung eines Feldgerätes, einer Kommunikationsverbindung, etc. eingetreten ist, dass aber ein weiterer Betrieb noch möglich ist. Während Alarm- oder Fehlermeldungen in der Regel mit hoher Priorität versendet werden, kann solch eine Nachricht in der Regel mit niedrigerer Priorität versendet werden. Zusätzlich oder alternativ zu einer Warnmeldung kann vorgesehen sein, dass der Status eines betreffenden Wertes, insbesondere eines Messwertes, nicht auf "bad" sondern lediglich auf "uncertain" (deutsch: unsicher) gesetzt wird und ein Operator dadurch von einer Verschlechterung benachrichtigt wird. Der betreffende Wert kann dabei noch weiter verwendet werden. Insbesondere kann hierbei vorgesehen sein, dass die Nachrichten jeweils Status-Informationen basierend auf der Status-Klassifizierung gemäß der Namur NE 107 Klassifizierung enthalten (vgl. FF-912-DPS3.01 für das Foundation® Fieldbus Bussystem). Dies ermöglicht in vorteilhafter Weise, dass die Status-Informationen herstellerübergreifend verwendbar und einheitlich sind.

Gemäß einer vorteilhaften Weiterbildung wird eine Nachricht, dass das Kriterium angepasst wurde, und/oder eine Alarm- oder Fehlermeldung von dem Controller an mindestens eine übergeordnete Einheit, insbesondere an ein SCADA-System (SCADA: Supervisory Control and Data Acquisition; deutsch: Überwachung, Steuerung und Datenerfassung), ein Asset Management System und/oder ein Visualisierungssystem gegeben. Diese Kommunikation an mindestens eine übergeordnete Einheit erfolgt insbesondere über ein Netzwerksystem der Ebene 2, wie beispielsweise über ein HSE-Netzwerk.

Gemäß einer vorteilhaften Weiterbildung ist in dem Feldgerät ein Diagnoseblock vorgesehen. Die Vorsehung eines Diagnoseblocks in dem Feldgerät hat den Vorteil, dass dadurch auch ein Zugriff auf geräteinterne Diagnoseparameter, auf die ein direkter Zugriff von dem Controller aus nicht möglich ist, ermöglicht wird. Bei dem Schritt des Auslesens wird bei dieser Weiterbildung der mindestens eine Diagnoseparameter des Feldgerätes durch diesen Diagnoseblock bereitgestellt. Dabei kann zum Einen vorgesehen sein, dass der/die jeweilige(n) Diagnoseparameter direkt an den Controller übermittelt werden und die Schritte B) bis D) in dem Controller durchgeführt werden. Dies ist insbesondere dann vorteilhaft, falls die vorbestimmten Kriterien für eine Alarm- oder Fehlermeldung in dem Controller hinterlegt sind, falls bei dem Schritt B) mehrere Diagnoseparameter unterschiedlicher Feldgeräte zueinander in Beziehung zu setzen sind und/oder falls für die Durchführung des Schrittes B) eine hohe Prozessorleistung erforderlich ist.

Alternativ ist gemäß einer vorteilhaften Weiterbildung vorgesehen, dass der Schritt B) durch den Diagnoseblock in dem Feldgerät durchgeführt wird und erst die nachfolgenden Schritte C) und D) in dem Controller durchgeführt werden. Diese Weiterbildung ist insbesondere für solche Diagnoseparameter vorteilhaft, bei denen für die Durchführung des Schrittes B) lediglich Diagnoseparameter des betreffenden Feldgerätes und nicht anderer Feldgeräte erforderlich sind. Dadurch kann der Controller entlastet werden. Für die Durchführung der Schritte B) bis D) beziehungsweise C) und D) ist vorzugsweise in dem Controller ebenfalls ein entsprechend ausgebildeter Diagnoseblock vorgesehen, wie oberhalb in Bezug auf eine vorteilhafte Weiterbildung erläutert wird.

Sofern durch das Diagnosesystem aus einem Feldgerät nur solche Diagnoseparameter ausgelesen werden sollen, auf die ein Lesezugriff direkt von dem Controller aus möglich ist, beispielsweise weil diese Diagnoseparameter nicht geräteintern sondern in Funktionsblöcken des Feldgerätes vorgesehen sind, kann auf die Vorsehung eines Diagnoseblocks in dem betreffenden Feldgerät auch verzichtet werden. In diesem Fall ist bei der vorliegenden Erfindung in dem Controller (mindestens) ein Diagnoseblock vorzusehen, der derart ausgebildet ist, dass durch diesen der Schritt des Auslesens (Schritt A)) durchgeführt und vorzugsweise auch die Schritte B) bis D) durchgeführt werden.

Gemäß einer vorteilhaften Weiterbildung ist in dem Controller ein Diagnoseblock vorgesehen, durch den mindestens einer der Schritte A) bis D) ganz oder teilweise durchgeführt wird. Wird/Werden der Schritt A) bzw. die Schritte A) und B) in dem Feldgerät durchgeführt, so ist jeweils bevorzugt, dass die verbleibenden Schritte durch den Diagnoseblock in dem Controller durchgeführt werden. Ferner kann vorgesehen sein, dass sämtliche Schritte A) bis D) durch den Diagnoseblock in dem Controller durchgeführt werden, wobei bei dem Schritt A) gegebenenfalls ein in dem Feldgerät vorgesehener, weiterer Diagnoseblock aufgerufen wird, beispielsweise um geräteinterne Diagnoseparameter des Feldgerätes auszulesen.

Gemäß einer vorteilhaften Weiterbildung wird der mindestens eine Diagnoseparameter durch einen oder mehrere der nachfolgenden Diagnoseparameter gebildet: einen oder mehrere Diagnoseparameter bezüglich der Kommunikationsverbindung des Feldgerätes, insbesondere einen Stale-Count-Parameter und/oder einen Parameter bezüglich der Anzahl der nicht lesbaren Telegramme, die durch das betreffende Feldgerät empfangen werden; und/oder einen oder mehrere gerätebezogene Diagnoseparameter, insbesondere einen Timeout-Parameter, durch den angegeben wird, ob durch das betreffende Feldgerät auf eine Anfrage innerhalb einer vorbestimmten Zeit eine Antwort gegeben wird, einen Parameter, durch den angegeben wird, ob für die Ausführung der Funktionsblöcke des Feldgerätes ausreichend Zeit zur Verfügung steht, einen Parameter bezüglich des Sensorzustandes des Feldgerätes, und/oder einen Parameter bezüglich der Speicherauslastung des Feldgerätes. Insbesondere bei diesen Diagnoseparametern ist die durch die vorliegende Erfindung bereitgestellte, flexible Anpassung des Diagnosesystems vorteilhaft.

Gemäß einer vorteilhaften Weiterbildung wird ein vorbestimmtes Kriterium für eine Alarmoder Fehlermeldung durch einen Grenzwert für einen Diagnoseparameter gebildet, bei dessen Über- oder Unterschreiten (bzw. gegebenenfalls auch bei dessen Erreichen) ein Kriterium für eine Alarm- oder Fehlermeldung erfüllt ist. Falls der Schritt C) ergibt, dass eine Anpassung des Grenzwertes möglich ist, kann dieser dementsprechend erhöht bzw. erniedrigt werden.

Gemäß einer vorteilhaften Weiterbildung wird der Schritt des Überprüfens, ob ein vorbestimmtes Kriterium für eine Alarm- oder Fehlermeldung erfüllt ist, unter Heranziehung mehrerer ausgelesener Diagnoseparameter eines oder mehrerer Feldgeräte(s) durchgeführt. Durch diese Weiterbildung können insbesondere mehrere Diagnoseparameter zueinander in Beziehung gesetzt werden. Insbesondere kann vorgesehen sein, dass ein Kriterium für eine Alarm- oder Fehlermeldung dann erfüllt ist, falls eine vorbestimmte Kombination bestimmter Parameterwerte bzw. Parameterwertebereiche gegeben ist. Kriterien für eine Alarm- oder Fehlermeldung können dementsprechend sehr detailliert und spezifisch definiert werden. Gemäß einer weiteren vorteilhaften Weiterbildung wird der Schritt des Überprüfens, ob eine Anpassung des Kriteriums möglich ist, unter Heranziehung mehrerer ausgelesener Diagnoseparameter eines oder mehrerer Feldgeräte(s) durchgeführt. Dadurch können wiederum mehrere Diagnoseparameter, insbesondere mehrere Diagnoseparameter verschiedener Feldgeräte, zueinander in Beziehung gesetzt werden. Beispielsweise kann bei einer vorbestimmten Kombination von Werten oder Wertebereichen von Parametern eine Anpassung ermöglicht werden. Dadurch wird ermöglicht, dass bei der Durchführung des Schrittes C) nicht nur die jeweiligen Informationen bezüglich des/der betroffenen Diagnoseparameter(s) sondern auch Informationen weiterer Parameter und gegebenenfalls weiterer Feldgeräte berücksichtigt werden. Dadurch kann durch das Diagnosesystem eine detaillierte Analyse der konkreten Situation vorgenommen werden und fundiert entschieden werden, ob eine Anpassung des Kriteriums für eine Alarm- oder Fehlermeldung möglich ist.

Um eine unzulässige Anpassung durch das Diagnosesystem zu verhindern, sind gemäß einer vorteilhaften Weiterbildung in dem mindestens einen Feldgerät absolute Grenzen für mindestens ein Kriterium für eine Alarm- oder Fehlermeldung vorgegeben, über die hinaus eine Anpassung des Kriteriums nicht zugelassen wird. Solche absoluten Grenzen können beispielsweise durch einen Hersteller eines Feldgerätes festgelegt und gegebenenfalls voreingestellt werden.

Gemäß einer vorteilhaften Weiterbildung ist in dem betreffenden Feldgerät, in dem eine Anpassung eines Kriteriums für eine Alarm- oder Fehlermeldung vorzunehmen ist, ein Funktionsblock implementiert (bzw. vorgesehen), der derart ausgebildet ist, dass durch diesen eine entsprechende Änderung in dem Feldgerät durchführbar ist. Dies ist insbesondere dann vorteilhaft, falls das betreffende, zu ändernde Kriterium in dem Feldgerät derart festgelegt ist, dass ein Zugriff darauf nicht direkt von dem Controller aus möglich ist. Wie oberhalb erläutert wurde, ist dies beispielsweise bei geräteinternen Parametern der Fall. Die Ausbildung dieses Funktionsblocks selbst ist vorzugsweise benutzerspezifisch (insbesondere durch den Hersteller definiert) und erfolgt derart, dass er die oberhalb angegebenen Funktionen erfüllt.

Gemäß einer vorteilhaften Weiterbildung ist der mindestens eine Diagnoseblock als Funktionsblock, insbesondere als Funktionsblock gemäß dem Foundation@ Fieldbus Bussystem, ausgebildet (vgl. hierzu zum Beispiel: Foundation® Specification, Function Block Application Process, Document FF-890, Revision FS 1.7). Dadurch werden standardisierte Schnittstellen bereitgestellt und ein Aufruf und die Ausführung des Diagnoseblocks sowie die Einbindung des Diagnosesystems in eine übergeordnete Steuerung werden erleichtert. Die Ausbildung des Diagnoseblocks selbst ist vorzugsweise benutzerspezifisch (insbesondere durch den Hersteller definiert) und erfolgt derart, dass der mindestens eine Diagnoseblock eine oder mehrere der oberhalb angegebenen Funktionen des Diagnosesystems erfüllt. Der Diagnoseblock kann dabei frei programmiert werden, beispielsweise mit der Programmiersprache IEC1131-3.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig.1:: eine Anlage der Prozessautomatisierungstechnik zur Erläuterung einer ersten Ausführungsform des erfindungsgemäßen Verfahrens; und
- Fig.2:: eine Anlage der Prozessautomatisierungstechnik zur Erläuterung einer zweiten Ausführungsform des erfindungsgemäßen Verfahrens.

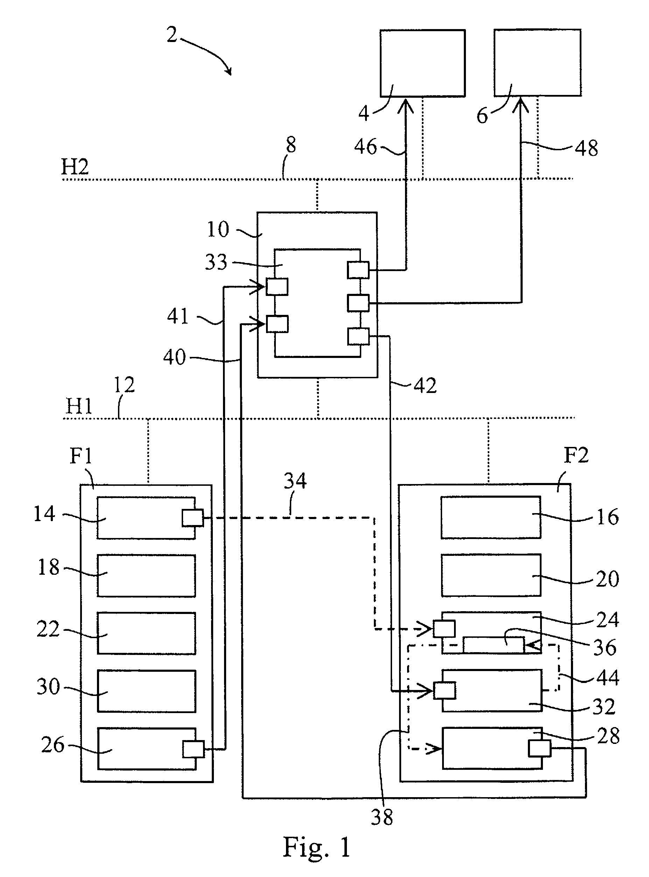

Fig.1 zeigt beispielhaft eine Anlage der Prozessautomatisierungstechnik 2. In der Anlage 2 sind ein SCADA-System 4 und ein Visualisierungssystem 6, das zur Visualisierung von Informationen bezüglich der Anlage an einen Benutzer dient, an einem Netzwerksystem 8 der Ebene 2 angeschlossen. Das Netzwerksystem 8 der Ebene 2 wird durch ein HSE-Netzwerk gebildet, auf dem die H2-Feldbus-Technologie angewendet wird. Neben dem SCADA-System 4 und dem Visualisierungssystem 6 können auch noch weitere übergeordnete Einheiten, wie beispielsweise ein Asset Management System, ein Archivierungssystem, etc., an dem Netzwerksystem 8 der Ebene 2 angeschlossen sein.

An dem Netzwerksystem 8 der Ebene 2 ist ferner ein Controller 10 angeschlossen, der ein Linking Device zu einem Foundation@ Fieldbus Feldbussystem 12 der Ebene 1 bildet. Auf dem Feldbussystem 12 der Ebene 1 wird die H1-Feldbus-Technologie angewendet. An dem Feldbussystem 12 der Ebene 1 sind ein erstes Feldgerät F1 und ein zweites Feldgerät F2 angeschlossen. Daneben können an dem Feldbussystem 12 der Ebene 1 auch noch weitere Feldgeräte, wie beispielsweise Sensoren, Aktoren, oder ein Gateway zu einem weiteren Feldbus-Segment, etc., angeschlossen sein.

Die beiden Feldgeräte F1 und F2 sind gemäß dem Foundation@ Fieldbus Feldbussystem aufgebaut und weisen in dem vorliegenden Ausführungsbeispiel jeweils einen Al-Funktionsblock (Al: Analog Input) 14, 16, einen Transducer-Block 18, 20, und einen AO-Funktionsblock (AO: Analog Output) 22, 24 auf. Daneben können auch noch weitere oder andere Funktionsblöcke bzw. Blöcke vorgesehen sein. Ferner sind in jedem Feldgerät F1, F2 jeweils zwei weitere, benutzerspezifische Funktionsblöcke, die im Folgenden als Diagnoseblock 26, 28 und als Therapieblock 30, 32 bezeichnet werden, vorgesehen. Diese werden in der Regel von einem Hersteller des jeweiligen Feldgerätes programmiert. In dem Controller 10 ist ebenfalls ein benutzerspezifischer Funktionsblock, der als Diagnoseblock 33 bezeichnet wird, vorgesehen. Auf die Funktion dieser benutzerspezifischen Funktionsblöcke 26, 28, 30, 32, 33 wird nachfolgend eingegangen.

Das Feldgerät F1 kommuniziert über das Feldbussystem 12 der Ebene 1 mit dem Feldgerät F2 im Rahmen einer Publisher-Subscriber-Kommunikation, die in dem Foundation@ Fieldbus Feldbussystem definiert ist. Das Feldgerät F1 bildet dabei den Publisher, während das Feldgerät F2 einen Subscriber bildet. Insbesondere ist ein Publisher-Subscriber-Link 34 zwischen dem Al-Funktionsblock 14 des ersten Feldgerätes F1 und dem AO-Funktionsblock 24 des zweiten Feldgerätes F2 definiert, so dass ein Ausgangswert des Al-Funktionsblocks 14 des ersten Feldgerätes F1 einen Eingangswert des AO-Funktionsblocks 24 des zweiten Feldgerätes F2 bildet. Der Publisher-Subscriber-Link 34 ist in Fig. 1 schematisch durch den gestrichelten Pfeil 34 dargestellt.

Im Folgenden wird beispielhaft anhand des Parameters Stale-Count und dessen Grenzwert eine mögliche Anpassung eines Kriteriums für eine Alarm- oder Fehlermeldung gemäß einer ersten Ausführungsform des erfindungsgemäßen Verfahrens erläutert. In dem Feldgerät F2 ist ein Parameter Stale-Count-Limit als ein Grenzwert für die Qualität der Kommunikationsverbindung des Publisher-Subscriber-Link 34 gespeichert. Der dem AO-Funktionsblock 24 des zweiten Feldgerätes F2 zugeordnete Speicherplatz des Stale-Count-Limits ist in Fig. 1 schematisch durch die Box 36 dargestellt. Dieser Parameter wird in der Regel bei der Konfigurierung des Feldbussystems und/oder von einem Hersteller des Feldgerätes vorgegeben und bleibt bisher unverändert. Zur Überwachung der Güte dieser Kommunikationsverbindung 34 (des Publisher-Subscriber-Link 34) wird in dem zweiten Feldgerät F2 überprüft, ob sich die Daten im Eingangspufferspeicher (der dem AO-Funktionsblock 24 zugeordnet ist) des Feldgerätes F2 während des letzten Makrozyklus geändert haben. Hierfür ist in dem zweiten Feldgerät F2 der Stale-Count-Parameter vorgesehen. Erreicht die Anzahl von aufeinanderfolgenden Makrozyklen, innerhalb derer sich der Eingangswert nicht geändert hat, den Grenzwert (Stale-Count-Limit), so ist ein Kriterium für eine Alarm- oder Fehlermeldung erfüllt. Bisher wurde in diesem Fall der Status des Eingangswertes des AO-Funktionsblocks auf "bad" gesetzt und der Wert war nicht mehr verwertbar.

Bei der ersten Ausführungsform des erfindungsgemäßen Verfahrens wird durch den Diagnoseblock 33 des Controllers 10 der Diagnoseblock 28 des zweiten Feldgerätes F2 aufgerufen, um den Stale-Count-Parameter des Publisher-Subscriber-Links 34 auszulesen. Die Diagnoseblöcke 26, 28 der beiden Feldgeräte F1 und F2 sind unscheduled, was bedeutet, dass diese nicht zyklisch sondern lediglich auf Anfrage abgearbeitet werden. Der Aufruf der Diagnoseblöcke 26, 28 der beiden Feldgeräte F1, F2 erfolgt azyklisch, im vorliegenden Ausführungsbeispiel im Rahmen einer Client-Server-Kommunikation (in dem Foundation® Fieldbus Bussystem spezifiziert). Der Diagnoseblock 28 des zweiten Feldgerätes F2 wiederum greift auf den zugehörigen Speicherplatz des Stale-Count-Parameters zu, was in Fig. 1 schematisch durch den strichpunktierten Pfeil 38 dargestellt ist. Der Diagnoseblock 28 des zweiten Feldgerätes F2 stellt den Stale-Count-Parameter anschließend dem Diagnoseblock 33 des Controllers 10 bereit, was in Fig. 1 schematisch durch den Pfeil 40 dargestellt ist. In gleicher Weise kann auch ein Diagnoseparameter aus dem ersten Feldgerät F1 ausgelesen werden, wie in Fig. 1 schematisch durch den Pfeil 41 zwischen dem Diagnoseblock 26 des ersten Feldgerätes F1 und dem Diagnoseblock 33 des Controllers 10 dargestellt ist.

Nach dem Auslesen des Stale-Count-Parameters wird in dem Diagnoseblock 33 des Controllers 10 überprüft, ob ein Stale-Count-Limit, der in dem zweiten Feldgerät F2 vorgesehen ist, erreicht wurde. Falls dies der Fall ist, wird in dem Diagnoseblock 33 des Controllers 10 anhand vorbestimmter Regeln überprüft, ob eine Anpassung des Stale-Count-Limits derart möglich ist, dass bei dem angepassten (bzw. geänderten) Stale-Count-Limit dieser nicht mehr erreicht wird. Beispielsweise können in dem Controller 10 Regeln bzw. Algorithmen hinterlegt sein, die vorgeben, dass ab einer bestimmten Einsatzdauer des Feldbussystems 12 der Ebene 1 eine Erhöhung des Stale-Count-Limits um einen vorbestimmten Betrag zulässig ist. Demgemäß können durch solche vorbestimmten Regeln noch akzeptable Alterungserscheinungen der jeweiligen Kommunikationsverbindung, insbesondere der eingesetzten Kabel, berücksichtigt werden. Ferner kann berücksichtigt werden, dass das betreffende Feldgerät in keinen zeitkritischen Prozess eingebunden ist und demgemäß auch ein höherer Grenzwert zulässig ist.

Falls der Diagnoseblock 33 des Controllers 10 zu dem Ergebnis kommt, dass eine Erhöhung des Stale-Count-Limits in dem Feldgerät F2 um einen vorbestimmten Betrag derart möglich ist, dass der ausgelesene Stale-Count-Parameter den geänderten Stale-Count-Limit nicht mehr erreicht, gibt er einen entsprechenden Befehl an einen Therapieblock 32 des zweiten Feldgerätes F2 aus. Dies ist in Fig. 1 schematisch durch den Pfeil 42 dargestellt. Der Therapieblock 32 ist derart ausgebildet, dass er bei Erhalt des Befehls auf den Speicherplatz des Stale-Count-Limits in dem zweiten Feldgerät F2 zugreifen und diesen gemäß dem Befehl ändern kann. Dies ist in Fig. 1 schematisch durch den strichpunktierten Pfeil 44 dargestellt. Ferner wird von dem Diagnoseblock 33 des Controllers 10 eine Nachricht, dass der Stale-Count-Limit angepasst wurde, über das Netzwerksystem 8 der Ebene 2 an das SCADA-System 4 und das Visualisierungssystem 6 gesendet. Dies ist in Fig. 1 schematisch durch die Pfeile 46, 48 dargestellt. Dabei kann diese Nachricht mit niedriger Priorität versendet werden, so dass Nachrichten mit hoher Priorität nicht unnötig verzögert werden. Durch solch eine Nachricht kann ein Benutzer beispielsweise informiert werden, dass zwar eine Verschlechterung der Kommunikationsverbindung, insbesondere des Publisher-Subscriber-Links 34, eingetreten ist, dass aber ein weiterer Betrieb der Anlage 2 noch möglich ist.

Falls der Diagnoseblock 33 des Controllers 10 zu dem Ergebnis kommt, dass eine Erhöhung des Stale-Count-Limits derart, dass der ausgelesene Stale-Count-Parameter den geänderten Stale-Count-Limit nicht mehr erreicht, nicht möglich ist, gibt er über das Netzwerksystem 8 der Ebene 2 eine Alarm- oder Fehlermeldung an das SCADA-System 4 und das Visualisierungssystem 6 aus (vgl. Pfeile 46, 48). Solch eine Alarm- oder Fehlermeldung wird dabei mit hoher Priorität versendet.

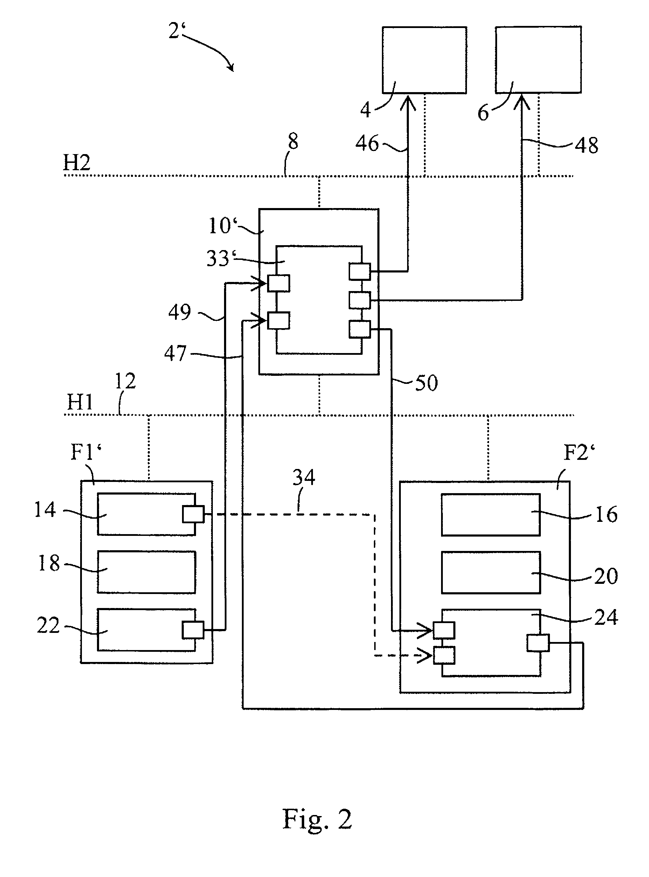

Im Folgenden wird unter Bezugnahme auf Fig. 2 eine zweite Ausführungsform des erfindungsgemäßen Verfahrens erläutert. Für gleiche Bauteile und Kommunikationsvorgänge werden wiederum die gleichen Bezugszahlen verwendet. Im Folgenden wird vorwiegend auf die Unterschiede gegenüber der ersten Ausführungsform eingegangen.

Bei der zweiten Ausführungsform werden im Unterschied zu der ersten Ausführungsform durch das Diagnosesystem, das in einer Anlage 2' der Prozessautomatisierungstechnik eingesetzt wird, lediglich Diagnoseparameter verwertet, auf die der Controller 10' über das Feldbussystem 12 der Ebene 1 direkt zugreifen kann. Dies sind beispielsweise Parameter, die in den Funktionsblöcken der jeweiligen Feldgeräte F1' und F2' vorgesehen sind. In den beiden Feldgeräten F1' und F2' sind keine Diagnoseblöcke und Therapieblöcke vorgesehen. Um einen Diagnoseparameter auszulesen, stellt der Diagnoseblock 33' des Controllers 10' direkt eine Leseanfrage an das betreffende Feldgerät. In dem vorliegenden Ausführungsbeispiel wird durch den Diagnoseblock 33' des Controllers 10' ein in dem AO-Funktionsblock 24 des zweiten Feldgerätes F2' vorgesehener Diagnoseparameter ausgelesen. Dies ist in Fig. 2 schematisch durch den Pfeil 47 dargestellt. In gleicher Weise kann auch ein Diagnoseparameter des ersten Feldgerätes F1' ausgelesen werden. Dies ist in Fig. 2 schematisch durch den Pfeil 49 zwischen dem AO-Funktionsblock 22 des ersten Feldgerätes F1' und dem Diagnoseblock 33' des Controllers 10' dargestellt.

Die Schritte des Überprüfens in dem Diagnoseblock 33' des Controllers 10' und gegebenenfalls des Übersendens einer Nachricht bzw. einer Alarm- oder Fehlermeldung an das SCADA-System 4 und das Visualisierungssystem 6 erfolgen in gleicher Weise, wie dies bei der ersten Ausführungsform unter Bezugnahme auf Fig. 1 erläutert wurde. Falls eine Anpassung eines Kriteriums für eine Alarm- oder Fehlermeldung in Bezug auf den ausgelesenen Parameter erforderlich ist, insbesondere falls ein hierfür vorgesehener Grenzwert zu erhöhen oder zu erniedrigen ist, kann dies durch einen direkten Schreibzugriff von dem Controller 10' auf das zweite Feldgerät F2' durchgeführt werden. Dies ist in Fig. 2 schematisch durch den Pfeil 50 zwischen dem Diagnoseblock 33' des Controllers 10' und dem AO-Funktionsblock 24 des zweiten Feldgerätes F2' dargestellt.

Die vorliegende Erfindung ist nicht auf die in den Figuren dargestellten Ausführungsbeispiele beschränkt. Wie bereits oberhalb erläutert wurde, kann das erfindungsgemäße Verfahren auch auf weitere Diagnoseparameter angewendet werden. Ein weiteres mögliches Beispiel ist ein Diagnoseparameter bezüglich des Sensorzustandes eines Feldgerätes. Solch ein Diagnoseparameter kann beispielsweise durch einen Parameter gebildet werden, durch den die Anzahl der aufgetretenen Überlastsituationen erfasst wird. Beispielsweise sind Druckmessgeräte für einen vorbestimmten Druckbereich, z. B. 0 - 1000 mbar, ausgelegt. Eine Überlastsituation liegt vor, falls dieser Druckbereich erheblich überschritten wird, beispielsweise bei einem Druck von mehr als 1050 mbar. In dem Feldgerät ist ferner ein Grenzwert für die Anzahl der aufgetretenen Überlastsituationen vorgesehen. Hierbei kann beispielsweise das erfindungsgemäße Verfahren derart implementiert werden, dass bei einer ersten Anzahl von erfassten Überlastsituationen, beispielsweise bei 50 Überlastsituationen, der von dem betreffenden Druckmessgerät erfasste Messwert weiterhin den Status "good" (deutsch: "gut") hat, der Controller aber über das Netzwerksystem der Ebene 2 an den Benutzer (bzw. an ein Visualisierungssystem, SCADA-System, etc.) eine entsprechende Mitteilung übersendet. Ferner wird bei einer zweiten Anzahl von erfassten Überlastsituationen, die höher als die erste Anzahl ist, beispielsweise bei 100 Überlastsituationen, der Status des von dem Druckmessgerät erfassten Messwertes auf "uncertain" gesetzt. Wiederum kann der Controller über das Netzwerksystem der Ebene 2 an den Benutzer (bzw. an ein Visualisierungssystem, SCADA-System, etc.) eine entsprechende Mitteilung übersenden. Bei einer dritten Anzahl von erfassten Überlastsituationen, die höher als die zweite Anzahl ist, beispielsweise bei 150 Überlastsituationen, wird der Status des von dem Druckmessgerät erfassten Messwertes auf "bad" gesetzt, so dass dieser nicht mehr verwertbar ist. Gleichzeitig wird von dem Controller eine Alarm- oder Fehlermeldung an den Benutzer (bzw. an ein Visualisierungssystem, SCADA-System, etc.) gesendet.

Ferner kann anstelle eines Foundation® Fieldbus Bussystems auch ein anderweitiges Feldbussystem, wie beispielsweise ein Profibus® oder HART® Bussystem oder auch ein proprietäres Feldbussystem eingesetzt werden.

In den in den Figuren dargestellten Ausführungsformen ist jeweils in dem Controller ein Diagnoseblock vorgesehen. Sofern in dem/den betreffenden Feldgerät(en) jeweils ein Diagnoseblock, durch den verschiedene Diagnoseparameter des mindestens einen Feldgerätes auslesbar sind, vorgesehen ist, kann in dm Controller auch auf die Vorsehung eines Diagnoseblocks verzichtet werden. Die von dem Controller durchzuführenden Schritte sind dann in dem Controller auf anderweitige Weise zu implementieren.

In den jeweiligen Feldgeräten können die Diagnoseblöcke und gegebenenfalls die Therapieblöcke sowohl als instantiierbare als auch als vorinstantiierte Blöcke vorgesehen sein. Bei einer Ausbildung als instaniierbare Blöcke ist in dem jeweiligen Feldgerät zunächst nur eine Art Vorlage dieser Blöcke in dem Feldgerät vorhanden. Erst durch die Instantiierung derselben wird realer Speicherplatz in dem betreffenden Feldgerät geschaffen, so dass die Blöcke dann tatsächlich aufrufbar sind und abgearbeitet werden können. Eine Instantiierung kann beispielsweise durch den Controller erfolgen. Nach dem Abarbeiten der jeweiligen Blöcke können diese zur Reduzierung des Speicherbedarfs auch wieder deinstantiiert werden. Alternativ können die Blöcke auch dauerhaft instantiiert bleiben. Bei vorinstantiierten Blöcken sind diese von Beginn an aufrufbar und können bei einem Aufruf direkt abgearbeitet werden. In diesem Fall ist von Anfang an ein entsprechender Speicherplatz für diese Blöcke vorgesehen.

Das erfindungsgemäße Verfahren kann basierend auf Systemzuständen (beispielsweise in Abhängigkeit von der Betriebsdauer einer Anlage, etc.), durch einen Benutzer oder auch zyklisch zur Ausführung angestoßen werden.

## Patentansprüche

1. Verfahren zur dynamischen Anpassung eines Diagnosesystems, das zumindest teilweise in einem Controller (10; 10') implementiert ist und das mindestens einen Diagnoseblock (26, 28, 33; 33') aufweist, wobei der Controller (10; 10') über einen Feldbus (12) mit mindestens einem Feldgerät (F1, F2; F1', F2') in Kommunikationsverbindung steht, wobei der mindestens eine Diagnoseblock (26, 28, 33; 33') derart ausgebildet ist, dass durch diesen verschiedene Diagnoseparameter des mindestens einen Feldgerätes (F1, F2; F1', F2') auslesbar sind, und wobei der mindestens eine Diagnoseblock (26, 28, 33; 33') in dem Controller (10; 10') und/oder in dem mindestens einen Feldgerät (F1, F2; F1', F2') implementiert ist, **gekennzeichnet durch** nachfolgende Schritte:
A) Auslesen mindestens eines Diagnoseparameters des Feldgerätes (F1, F2; F1', F2') **durch** das Diagnosesystem;
B) Überprüfen **durch** das Diagnosesystem unter Heranziehung des mindestens einen, ausgelesenen Diagnoseparameters, ob ein vorbestimmtes Kriterium für eine Alarm- oder Fehlermeldung erfüllt ist;
C) Falls solch ein vorbestimmtes Kriterium erfüllt ist, automatisiertes Überprüfen durch das Diagnosesystem anhand vorbestimmter Regeln, ob eine Anpassung des Kriteriums derart möglich ist, dass das angepasste Kriterium für eine Alarm- oder Fehlermeldung nicht mehr erfüllt ist; und
D) Ausgeben einer Alarm- oder Fehlermeldung nur dann, falls eine derartige Anpassung des Kriteriums nicht möglich ist.

2. Verfahren gemäß Anspruch 1, **dadurch gekennzeichnet, dass** dann, falls der Schritt des Überprüfens ergibt, dass eine derartige Anpassung des Kriteriums möglich ist, das Kriterium automatisiert entsprechend angepasst wird.

3. Verfahren gemäß Anspruch 1 oder 2, **dadurch gekennzeichnet, dass** die Schritte des Überprüfens, ob eine Anpassung des Kriteriums möglich ist, und des Ausgebens einer Alarm- oder Fehlermeldung durch den Controller (10; 10') durchgeführt werden.

4. Verfahren gemäß einem der vorangehenden Ansprüche, **dadurch gekennzeichnet, dass** in dem Fall, in dem das Kriterium angepasst wird, von dem Controller (10; 10') eine entsprechende Nachricht ausgegeben wird.

5. Verfahren gemäß einem der vorangehenden Ansprüche, **dadurch gekennzeichnet, dass** eine Nachricht, dass das Kriterium angepasst wurde, und/oder eine Alarm- oder Fehlermeldung von dem Controller (10; 10') an mindestens eine übergeordnete Einheit, insbesondere an ein SCADA-System (SCADA: Supervisory Control and Data Acquisition; deutsch: Überwachung, Steuerung und Datenerfassung) (4), ein Asset Management System und/oder ein Visualisierungssystem (6), gegeben wird.

6. Verfahren gemäß einem der vorangehenden Ansprüche, **dadurch gekennzeichnet, dass** in dem Feldgerät (F1, F2) ein Diagnoseblock (26, 28) vorgesehen ist und dass bei dem Schritt des Auslesens der mindestens eine Diagnoseparameter des Feldgerätes (F1, F2) durch diesen Diagnoseblock (26, 28) bereitgestellt wird.

7. Verfahren gemäß einem der vorangehenden Ansprüche, **dadurch gekennzeichnet, dass** in dem Feldgerät (F1, F2) ein Diagnoseblock (26, 28) vorgesehen ist und dass der Schritt des Überprüfens, ob ein vorbestimmtes Kriterium für eine Alarm- oder Fehlermeldung erfüllt ist, durch diesen Diagnoseblock (26, 28) durchgeführt wird.

8. Verfahren gemäß einem der vorangehenden Ansprüche, **dadurch gekennzeichnet, dass** in dem Controller (10; 10') ein Diagnoseblock (33; 33') vorgesehen ist, durch den mindestens einer der nachfolgenden Schritte ganz oder teilweise durchgeführt wird:
Schritt des Auslesens des mindestens einen Diagnoseparameters,
Schritt des Überprüfens, ob ein vorbestimmtes Kriterium für eine Alarm- oder Fehlermeldung erfüllt ist,
Schritt des Überprüfens, ob eine Anpassung des Kriteriums möglich ist, und/oder Schritt des Ausgebens einer Alarm- oder Fehlermeldung.

9. Verfahren gemäß einem der vorangehenden Ansprüche, **dadurch gekennzeichnet, dass** der mindestens eine Diagnoseparameter durch einen oder mehrere der nachfolgenden Diagnoseparameter gebildet wird:
einen oder mehrere Diagnoseparameter bezüglich der Kommunikationsverbindung des Feldgerätes (F1, F2; F1', F2'), insbesondere einen Stale-Count-Parameter und/oder einen Parameter bezüglich der Anzahl der nicht lesbaren Telegramme, die durch das betreffende Feldgerät (F1, F2; F1', F2') empfangen werden; und/oder einen oder mehrere gerätebezogene Diagnoseparameter, insbesondere einen Timeout-Parameter, durch den angegeben wird, ob durch das betreffende Feldgerät (F1, F2; F1', F2') auf eine Anfrage innerhalb einer vorbestimmten Zeit eine Antwort gegeben wird, einen Parameter, durch den angegeben wird, ob für die Ausführung der Funktionsblöcke des Feldgerätes (F1, F2; F1', F2') ausreichend Zeit zur Verfügung steht, einen Parameter bezüglich des Sensorzustandes des Feldgerätes (F1, F2; F1', F2'), und/oder einen Parameter bezüglich der Speicherauslastung des Feldgerätes (F1, F2; F1', F2').

10. Verfahren gemäß einem der vorangehenden Ansprüche, **dadurch gekennzeichnet, dass** ein vorbestimmtes Kriterium für eine Alarm- oder Fehlermeldung durch einen Grenzwert für einen Diagnoseparameter gebildet wird, bei dessen Über- oder Unterschreiten ein Kriterium für eine Alarm- oder Fehlermeldung erfüllt ist.

11. Verfahren gemäß einem der vorangehenden Ansprüche, **dadurch gekennzeichnet, dass** der Schritt des Überprüfens, ob ein vorbestimmtes Kriterium für eine Alarm- oder Fehlermeldung erfüllt ist, unter Heranziehung mehrerer ausgelesener Diagnoseparameter eines oder mehrerer Feldgeräte(s) (F1, F2; F1', F2') durchgeführt wird.

12. Verfahren gemäß einem der vorangehenden Ansprüche, **dadurch gekennzeichnet, dass** der Schritt des Überprüfens, ob eine Anpassung des Kriteriums möglich ist, unter Heranziehung mehrerer ausgelesener Diagnoseparameter eines oder mehrerer Feldgeräte(s) (F1, F2; F1', F2') durchgeführt wird.

13. Verfahren gemäß einem der vorangehenden Ansprüche, **dadurch gekennzeichnet, dass** in dem mindestens einen Feldgerät (F1, F2; F1', F2') absolute Grenzen für mindestens ein Kriterium für eine Alarm- oder Fehlermeldung vorgegeben sind, über die hinaus eine Anpassung des Kriteriums nicht zugelassen wird.

14. Verfahren gemäß einem der Ansprüche 2 bis 13, **dadurch gekennzeichnet, dass** im Falle einer Anpassung des Kriteriums eine entsprechende Änderung in dem betreffenden Feldgerät (F1, F2) durch einen Funktionsblock (30, 32) vorgenommen wird, der derart ausgebildet ist, dass durch diesen eine solche Änderung durchführbar ist und der in dem betreffenden Feldgerät (F1, F2) implementiert ist.

15. Verfahren gemäß einem der vorangehenden Ansprüche, **dadurch gekennzeichnet, dass** der mindestens eine Diagnoseblock (26, 28, 33; 33') als Funktionsblock, insbesondere als Funktionsblock gemäß dem Foundation@ Fieldbus Bussystem, ausgebildet ist.

## Claims

1. Procedure for the dynamic adaptation of a diagnostic system which is at least partially implemented in a controller (10, 10') and which has at least one diagnostic block (26, 28, 33, 33'), wherein the controller (10, 10') has a communication connection with at least one field device (F1, F2, F1', F2') via a fieldbus (12), wherein the one diagnostic block, at least, (26, 28, 33, 33') is designed in such a way that different diagnostic parameters of the one field device, at least, (F1, F2, F1', F2') can be read out via this diagnostic block, and wherein the one diagnostic block, at least, (26, 28, 33, 33') is implemented in the controller (10, 10') and/or in the one field device, at least (F1, F2, F1', F2'), **characterized by** the following steps:
A) the diagnostic system reads out at least one diagnostic parameter of the field device (F1, F2, F1',F2') ;
B) on the basis of the one diagnostic parameter at least, which is read out, the diagnostic system checks whether a predefined criterion for an alarm or error message is met;
C) if such a predefined criterion is met, the diagnostic system uses predefined rules to automatically check whether it is possible to adapt the criterion in such a way that the adapted criterion for an alarm or error message is no longer met; and
D) an alarm or error message is only issued if such adaptation of the criterion is not possible.

2. Procedure as claimed in Claim 1, **characterized in that** if the step involving the check finds that such criterion adaptation is possible the criterion is automatically adapted accordingly.

3. Procedure as claimed in Claim 1 or 2, **characterized in that** the step for checking whether it is possible to adapt the criterion and the step to issue an alarm or error message are performed by the controller (10, 10').

4. Procedure as claimed in one of the previous claims, **characterized in that** the controller (10, 10') issues a corresponding message if the criterion is adapted.

5. Procedure as claimed in one of the previous claims, **characterized in that** a message indicating that the criterion has been adapted and/or an alarm or error message is sent by the controller (10, 10') to at least one higher-order unit, notably a SCADA system (SCADA: Supervisory Control and Data Acquisition) (4), an asset management system and/or a visualization system (6).

6. Procedure as claimed in one of the previous claims, **characterized in that** a diagnostic block (26, 28) is provided in the field device (F1, F2) and **in that** - in the readout step - the one diagnostic parameter, at least, of the field device (F1, F2) is provided by this diagnostic block (26, 28).

7. Procedure as claimed in one of the previous claims, **characterized in that** a diagnostic block (26, 28) is provided in the field device (F1, F2) and **in that** the step that involves checking whether a predefined criterion is met for an alarm or error message is performed by this diagnostic block (26, 28).

8. Procedure as claimed in one of the previous claims, **characterized in that** a diagnostic block (33, 33') is provided in the controller (10, 10'), said block performing at least one of the following steps either fully or in part:
Step to read out the one diagnostic parameter at least
Step to check whether a predefined criterion is met for an alarm or error message
Step to check whether it is possible to adapt the criterion, and/or
Step to issue an alarm or error message.

9. Procedure as claimed in one of the previous claims, **characterized in that** the one diagnostic parameter, at least, is formed by one or more of the following diagnostic parameters:
one or more diagnostic parameters with regard to the communication connection of the field device (F1, F2, F1', F2'), notably a stale count parameter and/or a parameter with regard to the number of unreadable messages which the field device concerned (F1, F2, F1', F2') receives; and/or one or more device-specific diagnostic parameters, specifically a timeout parameter which indicates whether the field device concerned (F1, F2, F1', F2') provides a response to a request within a predefined timeframe, a parameter which indicates whether enough time is available to execute the function blocks of the field device (F1, F2, F1', F2'), a parameter concerning the sensor state of the field device (F1, F2, F1', F2') and/or a parameter concerning the rate of memory utilization of the field device (F1, F2, F1', F2').

10. Procedure as claimed in one of the previous claims, **characterized in that** a predefined criterion for an alarm or error message is formed by a limit value for a diagnostic parameter, wherein if said limit value is exceeded or undershot a criterion for an alarm or error message is met.

11. Procedure as claimed in one of the previous claims, **characterized in that** the step to check whether a predefined criterion for an alarm or error message is met is performed by using several diagnostic parameters which are read out from one or more field device(s) (F1, F2, F1', F2').

12. Procedure as claimed in one of the previous claims, **characterized in that** the step to check whether the criterion can be adapted is performed by using several diagnostic parameters which are read out from one or more field device(s) (F1, F2, F1', F2').

13. Procedure as claimed in one of the previous claims, **characterized in that** the field device (F1, F2, F1', F2') contains absolute limits that are predefined for at least one criterion for an alarm or error message and an adaptation of the criterion is not permitted beyond these absolute limits.

14. Procedure as claimed in one of the claims 2 to 13, **characterized in that** if the criterion is adapted a corresponding modification is made in the field device concerned (F1, F2) by a function block (30,32), which is designed in such a way that such a modification can be performed by said block and which is implemented in the field device concerned (F1, F2).

15. Procedure as claimed in one of the previous claims, **characterized in that** the one diagnostic block, at least, (26, 28, 33, 33') is designed as a function block, particularly a function block in accordance with the Foundation® Fieldbus bus system.

## Revendications

1. Procédé destiné à l'adaptation dynamique d'un système de diagnostic, lequel est implémenté au moins partiellement dans un contrôleur (10, 10') et qui comporte au moins un bloc de diagnostic (26, 28, 33, 33'), le contrôleur (10, 10') étant relié, par l'intermédiaire d'un bus de terrain (12), avec au moins un appareil de terrain (F1, F2, F1', F2') sous la forme d'une liaison de communication, l'au moins un bloc de diagnostic (26, 28, 33, 33') étant conçu de telle sorte à ce qu'il permette de lire différents paramètres de diagnostic de l'au moins un appareil de terrain (F1, F2, F1', F2'), et l'au moins un bloc de diagnostic (26, 28, 33, 33') étant implémenté dans le contrôleur (10, 10') et/ou dans l'au moins un appareil de terrain (F1, F2, F1', F2'), **caractérisé par** les étapes suivantes :
A) Lecture d'au moins un paramètre de diagnostic de l'appareil de terrain (F1, F2, F1', F2') par le système de diagnostic ;
B) Contrôle par le système de diagnostic sur la base de l'au moins un paramètre de diagnostic lu, si un critère prédéterminé est rempli pour un message d'alarme ou de défaut ;
C) Si un tel critère prédéterminé est rempli, contrôle automatisé par le système de diagnostic sur la base de règles prédéfinies, si une adaptation du critère est possible de telle sorte que le critère adapté ne soit plus rempli pour un message d'alarme ou de défaut ; et
D) Émission d'un message d'alarme ou de défaut uniquement si une telle adaptation du critère n'est pas possible.

2. Procédé selon la revendication 1, **caractérisé en ce que**, si l'étape de contrôle détermine qu'une telle adaptation du critère est possible, le critère est dans ce cas adapté en conséquence, au sein d'un processus automatisé.

3. Procédé selon la revendication 1 ou 2, **caractérisé en ce que** les étapes de contrôle, si une adaptation du critère est possible, et d'émission d'un message d'alarme ou de défaut sont réalisées par le contrôleur (10, 10').

4. Procédé selon l'une des revendications précédentes, **caractérisé en ce que**, dans le cas où le critère est adapté, un message correspondant est délivré par le contrôleur (10, 10').

5. Procédé selon l'une des revendications précédentes, **caractérisé en ce qu'**un message, indiquant que le critère a été adapté, et/ou qu'un message d'alarme ou de défaut est envoyé par le contrôleur (10, 10') à au moins une unité maître, notamment à un système SCADA (SCADA : Supervisory Control and Data Acquisition; en français : Surveillance, contrôle et acquisition de données) (4), un système de gestion des actifs et/ou un système de visualisation (6).

6. Procédé selon l'une des revendications précédentes, **caractérisé en ce qu'**est prévu, dans l'appareil de terrain (F1, F2), un bloc de diagnostic (26, 28) et **en ce que** l'étape de lecture de l'au moins un paramètre de diagnostic de l'appareil de terrain (F1, F2) est mise à disposition par ce bloc de diagnostic (26, 28).

7. Procédé selon l'une des revendications précédentes, **caractérisé en ce qu'**est prévu, dans l'appareil de terrain (F1, F2), un bloc de diagnostic (26, 28) et **en ce que** l'étape de contrôle, si un critère prédéterminé est rempli pour un message d'alarme ou de défaut, est réalisée par ce bloc de diagnostic (26, 28).

8. Procédé selon l'une des revendications précédentes, **caractérisé en ce qu'**est prévu, dans le contrôleur (10, 10'), un bloc de diagnostic (33, 33'), par l'intermédiaire duquel est réalisée totalement ou partiellement au moins l'une des étapes suivantes :
Étape de lecture de l'au moins un paramètre de diagnostic,
Étape de contrôle, si un critère prédéterminé est rempli pour un message d'alarme ou de défaut,
Étape de contrôle, si une adaptation du critère est possible, et/ou
Étape d'émission d'un message d'alarme ou de défaut.

9. Procédé selon l'une des revendications précédentes, **caractérisé en ce que** l'au moins un paramètre de diagnostic est formé par un ou plusieurs parmi les paramètres de diagnostic suivants :
un ou plusieurs paramètres de diagnostic concernant la liaison de communication de l'appareil de terrain (F1, F2, F1', F2'), notamment un paramètre de comptage d'état et/ou un paramètre concernant le nombre de télégrammes non lisibles, qui sont reçus par l'appareil de terrain concerné (F1, F2, F1', F2') ; et/ou un ou plusieurs paramètres de diagnostic se rapportant à l'appareil, notamment un paramètre de dépassement du délai imparti, lequel indique si une réponse est donnée par l'appareil de terrain (F1, F2, F1', F2') concerné à une demande en l'espace d'une durée prédéfinie, un paramètre, lequel indique si un temps suffisant est à la disposition de l'appareil de terrain (F1, F2, F1', F2') pour l'exécution des blocs de fonction, un paramètre concernant l'état du capteur de l'appareil de terrain (F1, F2, F1', F2') et/ou un paramètre concernant le taux d'occupation de la mémoire de l'appareil de terrain (F1, F2, F1', F2').

10. Procédé selon l'une des revendications précédentes, **caractérisé en ce qu'**un critère prédéterminé pour un message d'alarme ou de défaut est formé par un seuil pour un paramètre de diagnostic, seuil pour lequel un critère pour un message d'alarme ou de défaut est rempli en cas de dépassement par le haut ou par le bas de ce seuil.

11. Procédé selon l'une des revendications précédentes, **caractérisé en ce que** l'étape de contrôle, si un critère prédéterminé est rempli pour un message d'alarme ou de défaut, est réalisée sur la base de plusieurs paramètres de diagnostic lus d'un ou de plusieurs appareils de terrain (F1, F2, F1', F2').

12. Procédé selon l'une des revendications précédentes, **caractérisé en ce que** l'étape de contrôle, si une adaptation du critère est possible, est réalisée sur la base de plusieurs paramètres de diagnostic lus d'un ou de plusieurs appareils de terrain (F1, F2, F1', F2').

13. Procédé selon l'une des revendications précédentes, **caractérisé en ce que** dans l'au moins un appareil de terrain (F1, F2, F1', F2') des seuils absolus sont définis pour au moins un critère pour un message d'alarme ou de défaut, seuils au-delà desquels une adaptation du critère n'est plus autorisée.

14. Procédé selon l'une des revendications 2 à 13, **caractérisé en ce qu'**en cas d'adaptation du critère, une modification correspondante est effectuée dans l'appareil de terrain (F1, F2) concerné par un bloc de fonction (30,32), lequel est formé de telle manière qu'une telle modification puisse être réalisée par ce dernier et qui est implémenté dans l'appareil de terrain (F1, F2) concerné.

15. Procédé selon l'une des revendications précédentes, **caractérisé en ce que** l'au moins un bloc de diagnostic (26, 28, 33, 33') est formé en tant que bloc de fonction, notamment en tant que bloc de fonction conformément au système de bus Foundation(®) Fieldbus.
